# EUROPEAN PATENT SPECIFICATION

(11) **EP 2 136 603 B1**
(45) Date of publication and mention of the grant of the patent: **05.08.2015**
(21) Application number: 09162562.4
(22) Date of filing: 12.06.2009
(51) Int. Cl.: H05B 3/14, H05B 3/54

(54) **Heater and method for making the same**
Heizung und Herstellungsverfahren dafür
Dispositif de chauffage et son procédé de production

(30) Priority: 27.06.2008 CN 200810068070; 27.06.2008 CN 200810068069; 18.06.2008 CN 200810067904; 27.06.2008 CN 200810068076; 27.06.2008 CN 200810068077; 11.07.2008 CN 200810068458; 27.06.2008 CN 200810068078
(43) Date of publication of application: 23.12.2009
(73) Proprietor: Tsing Hua University, Haidian District Beijing (CN); Hon Hai Precision Industry Co., Ltd., Tu-cheng City, Taipei Hsien (TW)
(72) Inventor: Wang, Ding, Beijing (CN); Fan, Shou-Shan, Beijing (CN); Jiang, Kai-li, Beijing (CN); Feng, Chen, Beijing (CN); Liu, Kai, Beijing (CN); Liu, Chang-Hong, Beijing (CN)
(74) Representative: Huang, Chongguang

(56) References cited:
- EP-A2- 2 157 831
- WO-A1-2006/064242
- WO-A1-2007/089118
- DE-A1-102004 044 352
- DE-B3-102005 038 816
- US-A1- 2007 296 322
- WEI JINQUAN ET AL: "Carbon nanotube filaments in household light bulbs" APPLIED PHYSICS LETTERS, AIP, AMERICAN INSTITUTE OF PHYSICS, MELVILLE, NY, US, vol. 84, no. 24, 14 June 2004 (2004-06-14) , pages 4869-4871, XP012061761 ISSN: 0003-6951

## Description

The present disclosure relates to linear heaters and a method for making the linear heaters, and particularly, to a carbon-nanotube-based linear heater and method for making the same.

Heaters play an important role in our daily life, production and research. Conventional materials used in heaters are metal or alloy, which are heavy and easily oxidized.

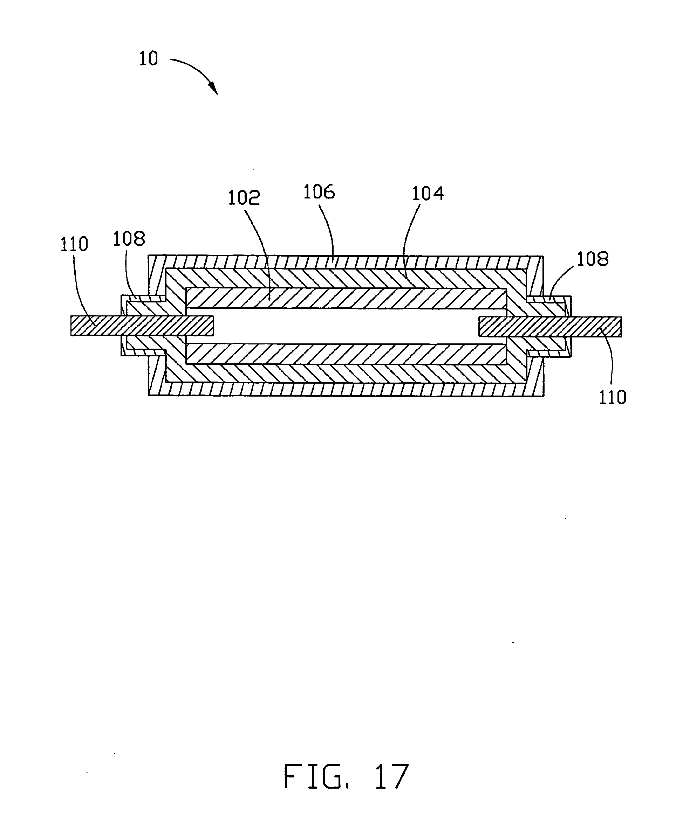

Referring to FIG. 17, a linear heater 10 is disclosed by the prior art. The linear heater 10 includes a hollow column supporter 102, a heating layer 104 located on the outer surface of the supporter 102, a protecting layer 106 located on the heating layer 104, two electrodes 110 separately located on two ends of the supporter 102 and electrically connected to the heating layer 106. Furthermore, the linear heater 10 includes two securing members 108 to fix the heating layer 104 on the supporter 102. The heating layer 104, generally, includes carbon fiber paper.

However, the carbon fiber paper has the following disadvantages. Firstly, the heating efficiency of the carbon fiber paper is low. Secondly, the carbon fiber paper is not fit to be used in very small linear heaters due to large diameter of the carbon fiber in the carbon fiber paper. WO-A-2006/064242 discloses an electrical heating element, DE102004044352 discloses a radiation heater, WO-A-2007/089118 discloses a heating element using carbon nanotubes and US-A-2007/296322 discloses a field emission element having carbon nanotubes.

What is needed, therefore, is to provide a linear heater and method for making the same with high heating efficiency.

Thus viewed from one aspect the present invention provides apparatus comprising: a linear heater which comprises:
a linear supporter having an outer surface;
a heating element located on the linear supporter, wherein the heating element is a pure carbon nanotube structure consisting of a plurality of carbon nanotubes joined end-to-end by van der Waals attractive force therebetween and oriented along a length direction of the linear supporter, wherein the carbon nanotube structure is wrapped on the outer surface of the linear supporter; and
two electrodes located on a surface of the carbon nanotube structure, spaced from each other along the length direction of the linear supporter, and electrically connected to the heating element, wherein the two electrodes are configured to supply a voltage therebetween, wherein the two electrodes are lamellar rings wrapped on the heating element and the plurality of carbon nanotubes extends from one of the two electrodes to the other and is aligned along a direction perpendicular to the two electrodes.

Many aspects of the present heater and method for making the same can be better understood with reference to the following drawings. The components in the drawings are not necessarily drawn to scale, the emphasis instead being placed upon clearly illustrating the principles of the present heater and method for making the same.
FIG. 1 is a schematic view of a linear heater in accordance with an embodiment of the present disclosure.
FIG. 2 is a cross-sectional schematic view of the linear heater of FIG. 1, taken along a line III- III.
FIG. 3 is a cross-sectional schematic view of the linear heater of FIG. 2, taken along a line IV-IV.
FIG. 4 is a schematic view of a linear heater, wherein the heating element includes a single linear carbon nanotube structures around the linear supporter.
FIG. 5 is a schematic view of a linear heater, wherein the heating element includes a plurality of parallel linear carbon nanotube structures.
FIG. 6 is a schematic view of a linear heater, wherein the heating element includes a plurality of woven linear carbon nanotube structures.
FIG. 7 is a Scanning Electron Microscope (SEM) image of a drawn carbon nanotube film.
FIG. 8 is a schematic view of a carbon nanotube segment of the drawn carbon nanotube film of FIG. 7.
FIG. 9 is a SEM image of a flocculent carbon nanotube film.
FIG. 10 is a SEM image of a pressed carbon nanotube film with the carbon nanotubes.
FIG. 11 is a SEM image of a pressed carbon nanotube film with the carbon nanotubes arranged along two or more directions.
FIG. 12 is a SEM image of an untwisted carbon nanotube wire.
FIG. 13 is a SEM image of a twisted carbon nanotube wire.
FIG. 14 is a view of the relationship of the power and the temperature of the linear heater in FIG 1.
FIG 15 is a flow chart of a method for making the linear heater in FIG. 1.
FIG. 16 is photo of a carbon nanotube floccule structure in accordance with an embodiment of the present disclosure.
FIG. 17 is a schematic view of a linear heater of the prior art.

Corresponding reference characters indicate corresponding parts throughout the several views. The exemplifications set out herein illustrate at least one embodiment of the present linear heater and method for making the same, in at least one form, and such exemplifications are not to be construed as limiting the scope of the disclosure in any manner.

References will now be made to the drawings to describe, in detail, various embodiments of the present linear heaters and method for making the same.

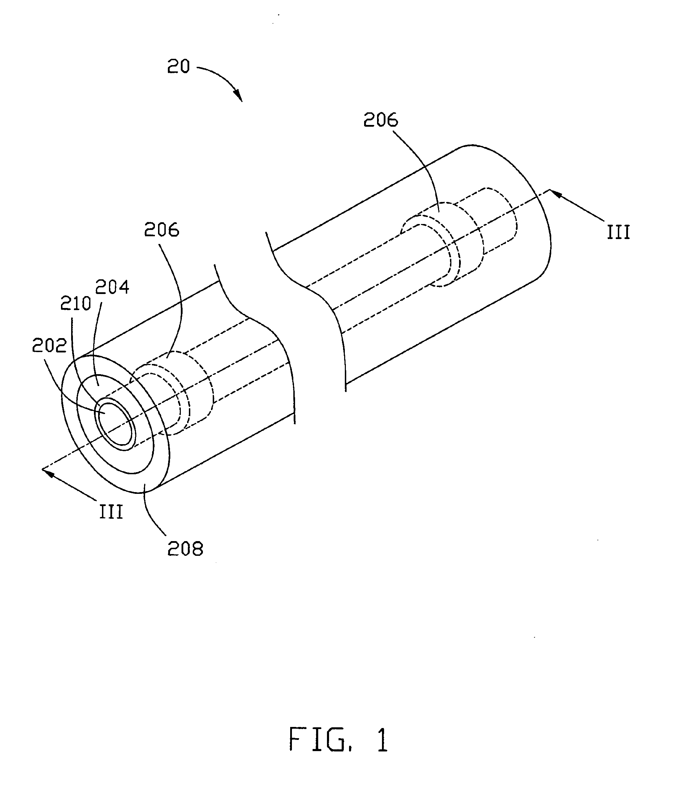

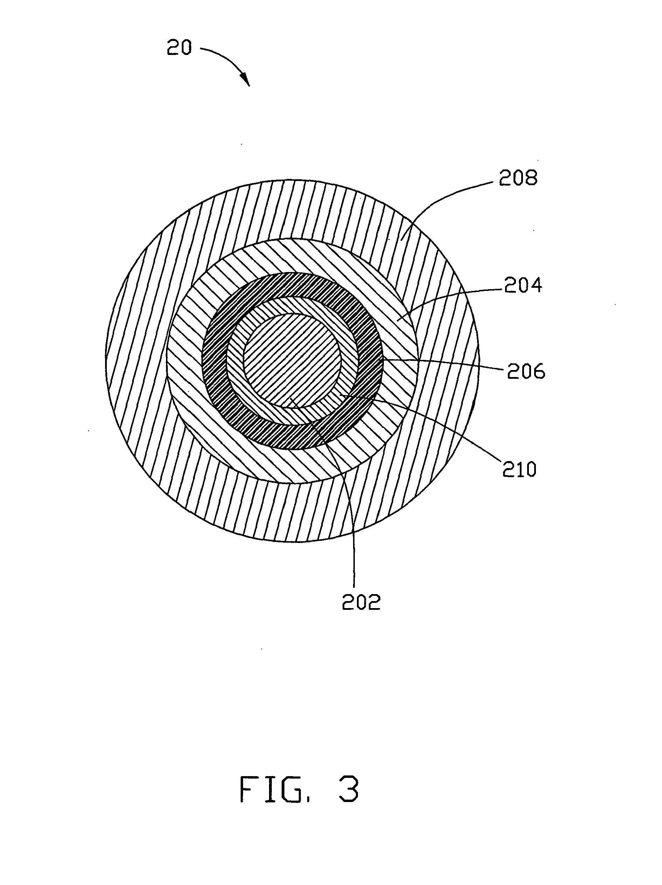

Referring to FIGS. 1-3, a linear heater 20 in accordance with one embodiment is shown. The linear heater 20 includes a linear supporter 202, a heat-reflecting layer 210, a heating element 204, two electrodes 206, and a protecting layer 208. The heat-reflecting layer 210 can be located on a surface of the linear supporter 202. The heating element 204 can be wrapped on a surface of the heat-reflecting layer 210. The two electrodes 206 are separately located from each other and electrically connected to the heating element 204. The two electrodes 206 can be located on a surface of the heating element 204. In one embodiment, the two electrodes 206 are located on an inner surface of the heating element 204. The protecting layer 208 covers the heating element 204 and the two electrodes 206. A length and diameter of the linear heater 20 are arbitrary. A diameter of the linear heater 20 is very small compared with a length of itself. A ratio of length to diameter of the linear heater 20 can be in a range from about 50 to about 5000. In one embodiment, a diameter of the linear heater 20 is in a range from about 1.1 millimeters to about 1.1 centimeters.

The linear supporter 202 is configured for supporting the heating element 204. The linear supporter 202 has a linear structure, and the diameter of the linear supporter 202 is small compared with a length of itself. The linear supporter 202 is made of flexible materials or rigid materials. The flexible materials may be plastics, resins, fibers or combinations thereof. The rigid materials may be ceramics, glasses, quartzes or combinations thereof. When flexible materials are used, linear supporter 202 can be shaped into a desired form. When the material of the linear supporter 202 is rigid, the linear heater 20 can maintain a fixed shape. The shape and size of the linear supporter 202 can be determined according to practical needs. For example, the linear supporter 202 may be square, round or triangular. Length and diameter of the linear supporter 202 can be determined according to practical needs. In one embodiment, the supporter 202 is a ceramic rod. Diameter of the ceramic rod can be in a range from about 1 millimeter to about 1 centimeter.

The heat-reflecting layer 210 is configured for reflecting the heat emitted by the heating element 204 and diffuse the heat to outside effectively. The heat-reflecting layer 210 may be made of insulative materials. The material of the heat-reflecting layer 210 can be selected from a group consisting of metal oxides, metal salts, ceramics and combinations thereof. In one embodiment, the heat-reflecting layer 210 is made of aluminum oxide. Thickness of the heat-reflecting layer 210 can ranges from about 100 micrometers to about 0.5 millimeter. The heat-reflecting layer 210 can be formed on the linear supporter 202 by sputtering or coating. Alternatively, the heat-reflecting layer 210 can be omitted.

The heating element 204 can be attached on the surface of the linear supporter 202 directly. When the heat-reflecting layer 210 formed on the surface of the linear supporter 202, the heating element 204 can be attached on the surface of the heat-reflecting layer 210.

The heating element 204 includes at least one carbon nanotube structure. The carbon nanotube structure includes a plurality of carbon nanotubes uniformly distributed therein, and the carbon nanotubes therein can be combined by Van der Waals attractive force therebetween. The carbon nanotube structure can be a substantially pure structure of the carbon nanotubes, with few impurities. The carbon nanotubes can be used to form many different structures and provide a large specific surface area. The heat capacity per unit area of the carbon nanotube structure can be less than 2×10⁻⁴ J/m²·K. Typically, the heat capacity per unit area of the carbon nanotube structure is less than 1.7×10⁻⁶ J/m²·K. As the heat capacity of the carbon nanotube structure is very low, and the temperature of the heating element 204 can rise and fall quickly, which makes the heating element 204 have a high heating efficiency and accuracy. As the carbon nanotube structure can be substantially pure, the carbon nanotubes are not easily oxidized and the life of the heating element 204 will be relatively long. Further, the carbon nanotubes have a low density, about 1.35 g/cm³, so the heating element 204 is light. As the heat capacity of the carbon nanotube structure is very low, the heating element 204 has a high response heating speed. As the carbon nanotube has large specific surface area, the carbon nanotube structure with a plurality of carbon nanotubes has large specific surface area. When the specific surface of the carbon nanotube structure is large enough, the carbon nanotube structure is adhesive and can be directly applied to a surface.

The carbon nanotubes in the carbon nanotube structure can be arranged orderly or disorderly. The term 'disordered carbon nanotube structure' refers to a structure where the carbon nanotubes are arranged along many different directions, and the aligning directions of the carbon nanotubes are random. The number of the carbon nanotubes arranged along each different direction can be almost the same (e.g. uniformly disordered). The disordered carbon nanotube structure can be isotropic. The carbon nanotubes in the disordered carbon nanotube structure can be entangled with each other.

The carbon nanotube structure including ordered carbon nanotubes is an ordered carbon nanotube structure. The term 'ordered carbon nanotube structure' refers to a structure where the carbon nanotubes are arranged in a consistently systematic manner, e.g., the carbon nanotubes are arranged approximately along a same direction and/or have two or more sections within each of which the carbon nanotubes are arranged approximately along a same direction (different sections can have different directions). The carbon nanotubes in the carbon nanotube structure can be selected from a group consisting of single-walled, double-walled, and/or multi-walled carbon nanotubes.

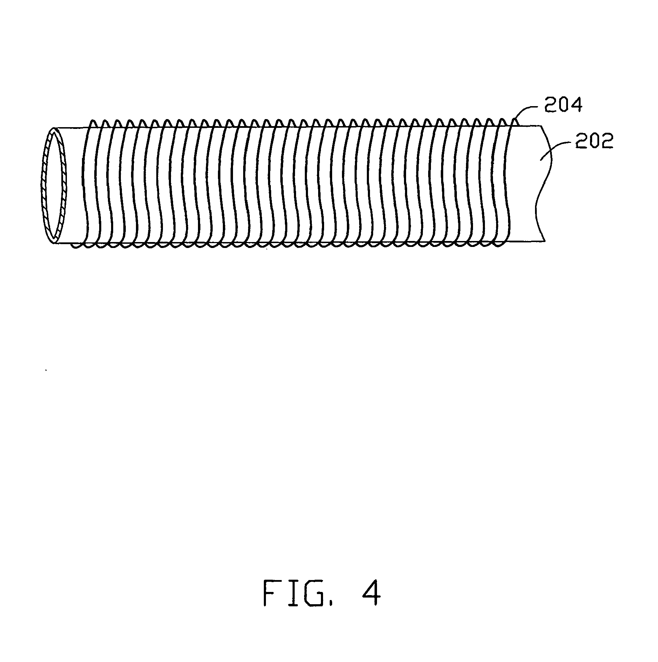

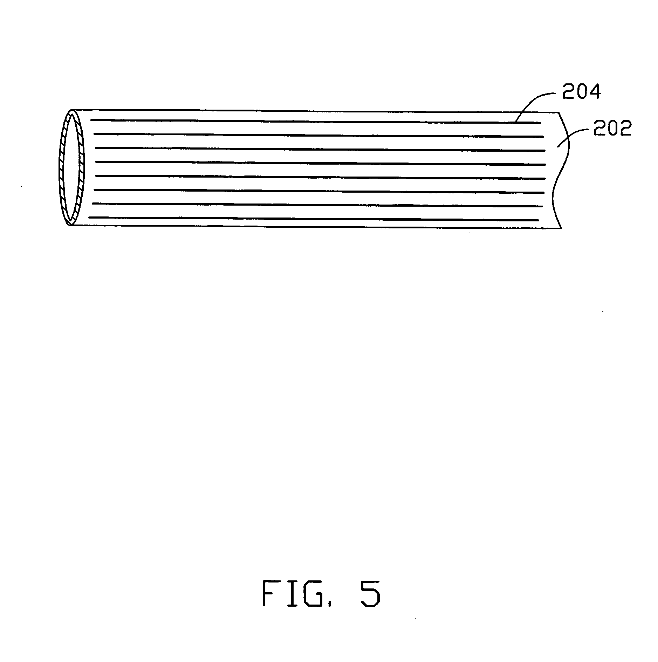

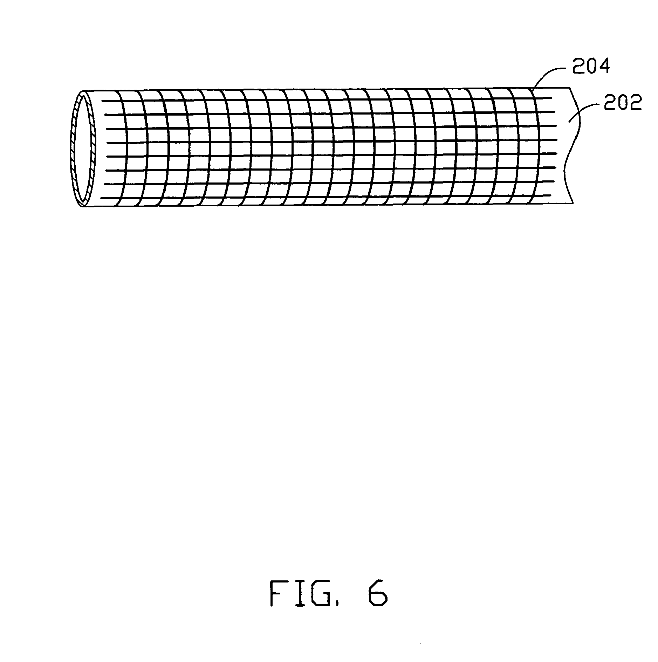

The carbon nanotube structure can be a carbon nanotube film structure with a thickness ranging from about 0.5 nanometers to about 1 millimeter. The carbon nanotube film structure can include at least one carbon nanotube film. The carbon nanotube structure can also be a linear carbon nanotube structure with a diameter ranging from about 0.5 nanometers to about 1 millimeter. The carbon nanotube structure can also be a combination of the carbon nanotube film structure and the linear carbon nanotube structure. It is understood that any carbon nanotube structure described can be used with all embodiments. It is also understood that any carbon nanotube structure may or may not employ the use of a support structure. In one example, the heating element 204 includes carbon nanotube film structure, the carbon nanotube film structure can be wrapped on the linear supporter 202. Referring to FIG. 4, in other example, the heating element 204 includes a single linear carbon nanotube structure, the linear carbon nanotube structure can twist around the linear supporter 202 like a helix. In another example, referring to FIG. 5, when the heating element 204 includes two or more linear carbon nanotube structures, the linear carbon nanotube structures can be disposed on the surface of the linear supporter 202 and parallel with each other. The linear carbon nanotube structure can be disposed side by side or separately. Alternatively, referring to FIG. 6, when the heating element 204 includes a plurality of linear carbon nanotube structures, the linear carbon nanotube structures can be knitted to form a net disposed on the surface of the linear supporter 202. It is understood that in some embodiments, some of the carbon nanotube structures have large specific surface area and adhesive nature, such that the heating element 204 can be adhered directly to surface of the linear supporter 202.

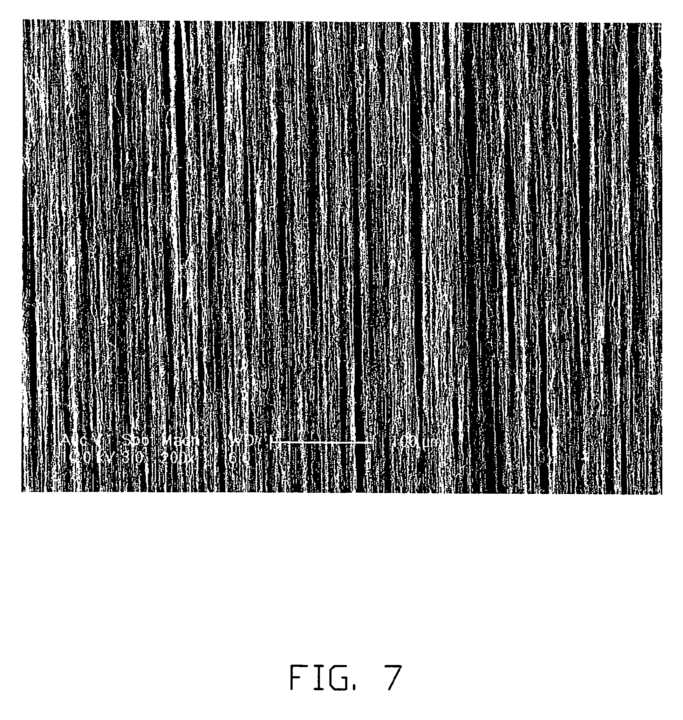

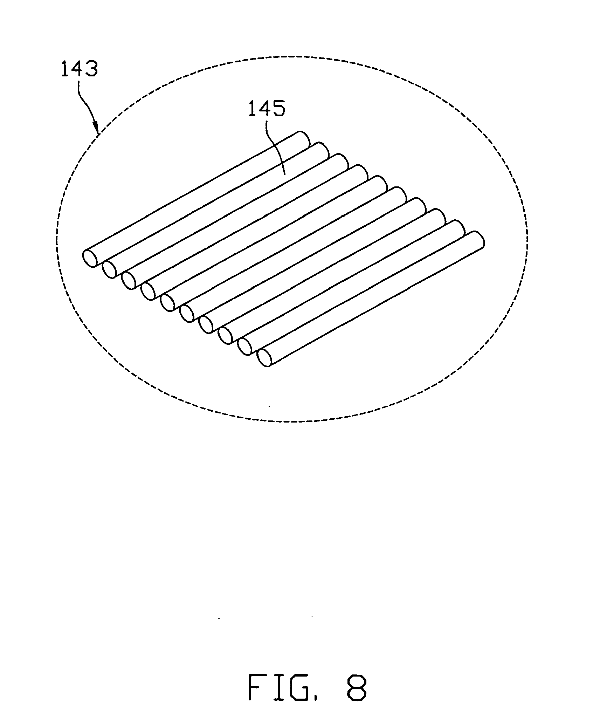

In one embodiment, the carbon nanotube film structure includes at least one drawn carbon nanotube film. A film can be drawn from a carbon nanotube array, to form a drawn carbon nanotube film. Examples of drawn carbon nanotube film are taught by US patent 7,045,108 to Jiang et al., and WO 2007015710 to Zhang et al. The drawn carbon nanotube film includes a plurality of successive and oriented carbon nanotubes joined end-to-end by Van der Waals attractive force therebetween. The drawn carbon nanotube film is a free-standing film. Referring to FIGS. 7 to 8, each drawn carbon nanotube film includes a plurality of successively oriented carbon nanotube segments 143 joined end-to-end by Van der Waals attractive force therebetween. Each carbon nanotube segment 143 includes a plurality of carbon nanotubes 145 parallel to each other, and combined by Van der Waals attractive force therebetween. As can be seen in FIG. 7, some variations can occur in the drawn carbon nanotube film. The carbon nanotubes 145 in the drawn carbon nanotube film are oriented along a preferred orientation. The carbon nanotube film can be treated with an organic solvent to increase the mechanical strength and toughness of the carbon nanotube film and reduce the coefficient of friction of the carbon nanotube film. A thickness of the carbon nanotube film can range from about 0.5 nanometers to about 100 micrometers. The heat capacity per unit area of the single drawn carbon nanotube film is less than 1.7×10⁻⁶ J/m²·K.

The carbon nanotube film structure of the heating element 204 can include at least two stacked carbon nanotube films. In other embodiments, the carbon nanotube structure can include two or more coplanar carbon nanotube films, and can include layers of coplanar carbon nanotube films. Additionally, when the carbon nanotubes in the carbon nanotube film are aligned along one preferred orientation (e.g., the drawn carbon nanotube film), an angle can exist between the orientation of carbon nanotubes in adjacent films, whether stacked or adjacent. Adjacent carbon nanotube films can be combined by only the Van der Waals attractive force therebetween. The number of the layers of the carbon nanotube films is not limited as long as the carbon nanotube structure. However the thicker the carbon nanotube structure, the specific surface area will decrease. An angle between the aligned directions of the carbon nanotubes in two adjacent carbon nanotube films can range from above 0° to about 90°. When the angle between the aligned directions of the carbon nanotubes in adjacent carbon nanotube films is larger than 0 degrees, a microporous structure is defined by the carbon nanotubes in the heating element 204. The carbon nanotube structure in an embodiment employing these films will have a plurality of micropores. Stacking the carbon nanotube films will also add to the structural integrity of the carbon nanotube structure. In some embodiments, the carbon nanotube structure has a free standing structure and does not require the use of the linear supporter 202.

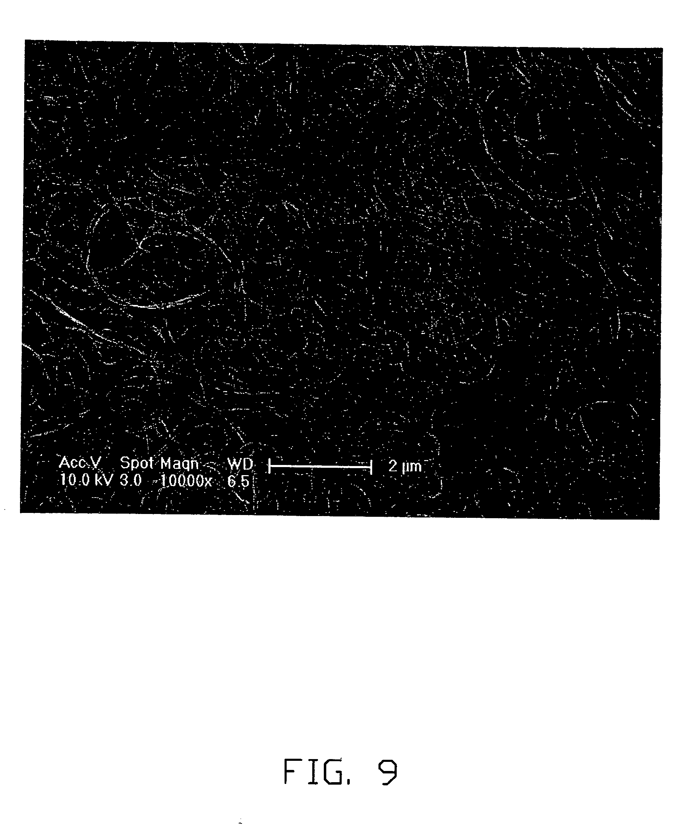

In another embodiment, the carbon nanotube film structure includes a flocculated carbon nanotube film. Referring to FIG. 9, the flocculated carbon nanotube film can include a plurality of long, curved, disordered carbon nanotubes entangled with each other. Further, the flocculated carbon nanotube film can be isotropic. The carbon nanotubes can be substantially uniformly dispersed in the carbon nanotube film. Adjacent carbon nanotubes are acted upon by Van der Waals attractive force to form an entangled structure with micropores defined therein. It is understood that the flocculated carbon nanotube film is very porous. Sizes of the micropores can be less than 10 micrometers. The porous nature of the flocculated carbon nanotube film will increase specific surface area of the carbon nanotube structure. Further, due to the carbon nanotubes in the carbon nanotube structure being entangled with each other, the carbon nanotube structure employing the flocculated carbon nanotube film has excellent durability, and can be fashioned into desired shapes with a low risk to the integrity of the carbon nanotube structure. The flocculated carbon nanotube film, in some embodiments, will not require the use of the linear supporter 202 due to the carbon nanotubes being entangled and adhered together by Van der Waals attractive force therebetween. The thickness of the flocculated carbon nanotube film can range from about 0.5 nanometers to about 1 millimeter.

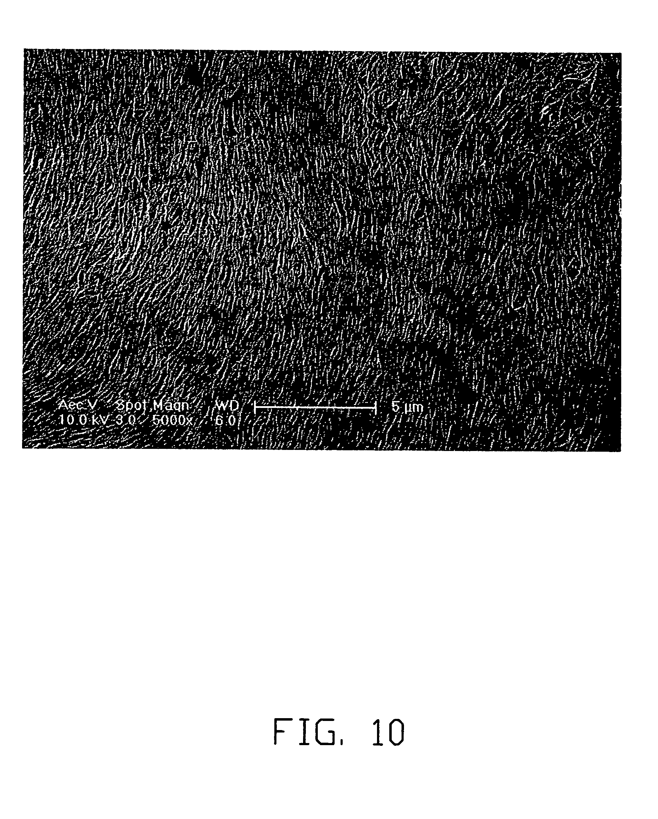

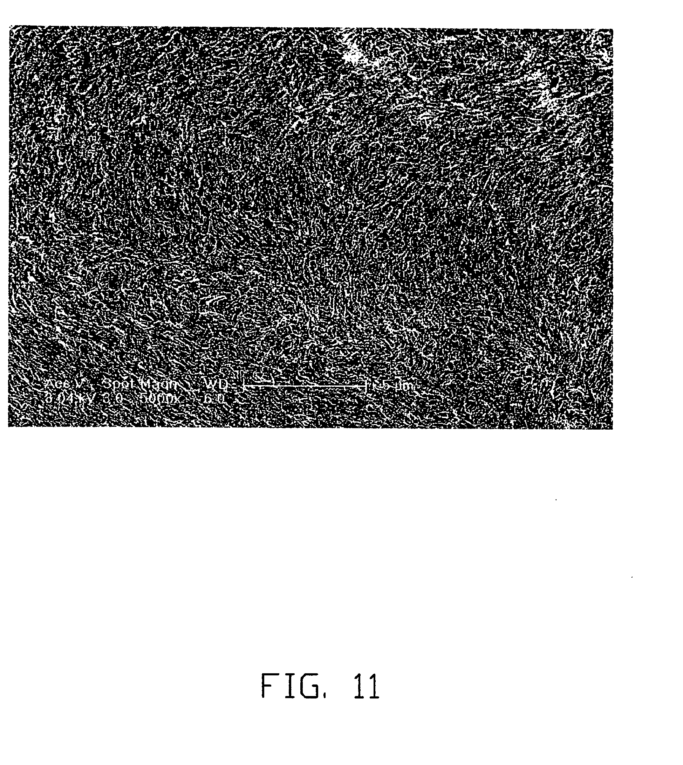

In another embodiment, the carbon nanotube film structure can include at least a pressed carbon nanotube film. Referring to FIG. 10 to 11, the pressed carbon nanotube film can be a free-standing carbon nanotube film. The carbon nanotubes in the pressed carbon nanotube film are arranged along a same direction or arranged along different directions. The carbon nanotubes in the pressed carbon nanotube film can rest upon each other. Adjacent carbon nanotubes are attracted to each other and combined by Van der Waals attractive force. An angle between a primary alignment direction of the carbon nanotubes and a surface of the pressed carbon nanotube film is 0 degrees to approximately 15 degrees. The greater the pressure applied, the smaller the angle formed. When the carbon nanotubes in the pressed carbon nanotube film are arranged along different directions, the carbon nanotube structure can be isotropic. The thickness of the pressed carbon nanotube film ranges from about 0.5 nanometers to about 1 millimeter. Examples of pressed carbon nanotube film are taught by US application 20080299031A1 to Liu et al.

In other embodiments, the linear carbon nanotube structure includes carbon nanotube wires and/or carbon nanotube cables.

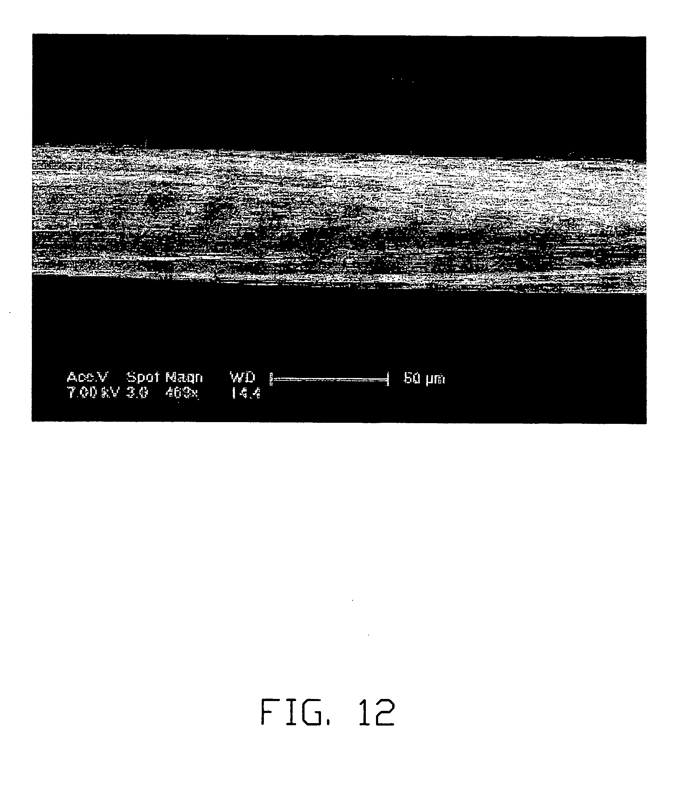

The carbon nanotube wire can be untwisted or twisted. Treating the drawn carbon nanotube film with a volatile organic solvent can form the untwisted carbon nanotube wire. Specifically, the organic solvent is applied to soak the entire surface of the drawn carbon nanotube film. During the soaking, adjacent parallel carbon nanotubes in the drawn carbon nanotube film will bundle together, due to the surface tension of the organic solvent as it volatilizes, and thus, the drawn carbon nanotube film will be shrunk into untwisted carbon nanotube wire. Referring to FIG. 12, the untwisted carbon nanotube wire includes a plurality of carbon nanotubes substantially oriented along a same direction (i.e., a direction along the length of the untwisted carbon nanotube wire). The carbon nanotubes are parallel to the axis of the untwisted carbon nanotube wire. More specifically, the untwisted carbon nanotube wire includes a plurality of successive carbon nanotube segments joined end to end by Van der Waals attractive force therebetween. Each carbon nanotube segment includes a plurality of carbon nanotubes substantially parallel to each other, and combined by Van der Waals attractive force therebetween. The carbon nanotube segments can vary in width, thickness, uniformity and shape. Length of the untwisted carbon nanotube wire can be arbitrarily set as desired. A diameter of the untwisted carbon nanotube wire ranges from about 0.5 nanometers to about 100 micrometers.

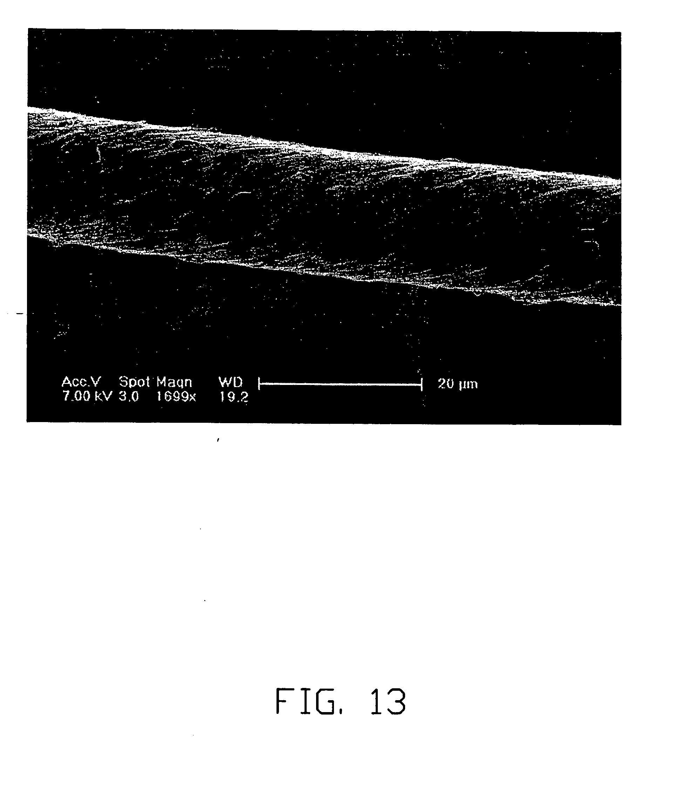

The twisted carbon nanotube wire can be formed by twisting a drawn carbon nanotube film using a mechanical force to turn the two ends of the drawn carbon nanotube film in opposite directions. Referring to FIG. 13, the twisted carbon nanotube wire includes a plurality of carbon nanotubes helically oriented around an axial direction of the twisted carbon nanotube wire. More specifically, the twisted carbon nanotube wire includes a plurality of successive carbon nanotube segments joined end to end by Van der Waals attractive force therebetween. Each carbon nanotube segment includes a plurality of carbon nanotubes parallel to each other, and combined by Van der Waals attractive force therebetween. Length of the carbon nanotube wire can be set as desired. A diameter of the twisted carbon nanotube wire can be from about 0.5 nanometers to about 100 micrometers. Further, the twisted carbon nanotube wire can be treated with a volatile organic solvent after being twisted. After being soaked by the organic solvent, the adjacent paralleled carbon nanotubes in the twisted carbon nanotube wire will bundle together, due to the surface tension of the organic solvent when the organic solvent volatilizing. The specific surface area of the twisted carbon nanotube wire will decrease, while the density and strength of the twisted carbon nanotube wire will be increased.

The carbon nanotube cable includes two or more carbon nanotube wires. The carbon nanotube wires in the carbon nanotube cable can be, twisted or untwisted. In an untwisted carbon nanotube cable, the carbon nanotube wires are parallel with each other. In a twisted carbon nanotube cable, the carbon nanotube wires are twisted with each other.

The heating element 204 can include a plurality of linear carbon nanotube structures. The plurality of linear carbon nanotube structures can be paralleled with each other, cross with each other, weaved together, or twisted with each other. The resulting structure can be a planar structure if so desired.

The two electrodes 206 can be disposed on a same surface or opposite surfaces of the heating element 204. The shape of the two electrodes 206 is not limited and can be lamellar, rod, wire, and block among other shapes. It is imperative that two electrodes 206 are separated so that the area of the heating element 204 between the two electrodes 206 has a certain resistance therebetween and a short circuit is prevented. The two electrodes 206 can be conductive films, metal sheets or metal wires. The electrodes 206 can be made of material selected from the group consisting of metal, alloy, conductive resin, indium-tin oxide (ITO), conductive adhesive, carbon nanotube and any other suitable materials.

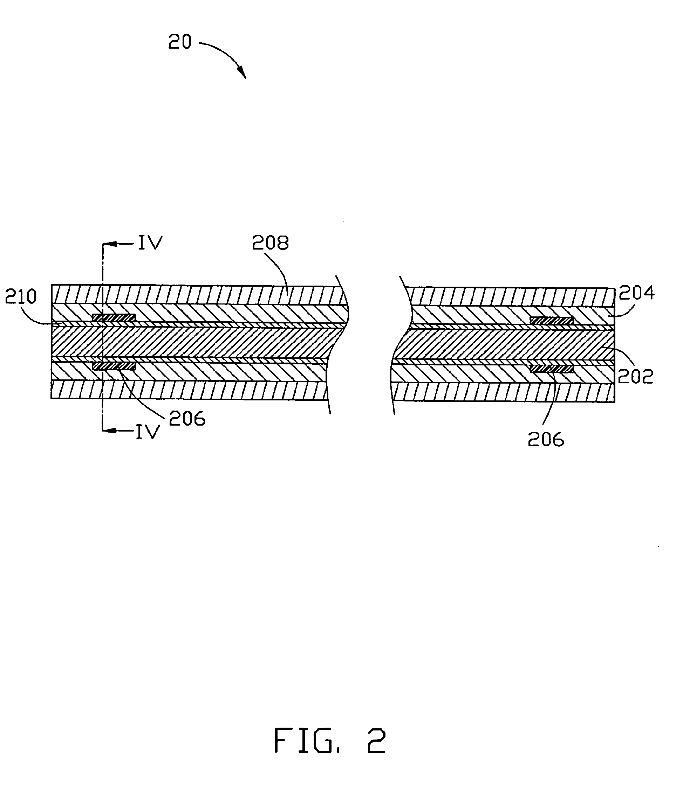

In the embodiment shown in FIGS. 1 and 2, the two electrodes 206 are both lamellar rings. In some embodiments, the carbon nanotubes in the heating element 204 are aligned along a direction perpendicular to the two electrodes 206. In other embodiments, at least one of the two electrodes 206 includes at least one carbon nanotube film or at least a linear carbon nanotube structure. In other embodiments, each of the electrode 206 includes a linear carbon nanotube structure. The linear carbon nanotube structures disposed on the two ends of the heating element 204, and wrap the heating element 204 to form two rings. Because of the adhesive properties of the carbon nanotube structure, the electrodes 206 can be directly attached to the heating element 204 thereby forming an electrical contact therebetween. The electrodes 206 also can be attached on the same surface of the heating element 204 by hot pressing process or via conductive adhesive. The conductive adhesive material can be silver adhesive. It should be noted that any other bonding ways may be adopted as long as the electrodes 206 can be electrically connected to the heating element 204.

The protecting layer 208 is disposed on the outer surface of the heating element 204. In one embodiment, the protecting layer 208 fully covers the outer surface of the heating element 204. The heating element 204 is located between the protecting layer 208 and the heat-reflecting layer 210. The material of protecting layer 208 can be electric or insulative such as resin or rubber. When the material of the protecting layer 208 is insulative such as resin and rubber, the protecting layer 208 can electrically and/or thermally insulate the linear heater 20 from the external environment. The protecting layer 208 can also protect the heating element 204 from outside contaminants. The protecting layer 208 is an optional structure and can be omitted. A thickness of protecting layer 208 is arbitrary. In one embodiment, the protecting layer 208 is made of rubber and a thickness of protecting layer 208 can be in a range from about 0.5 millimeter to about 2 millimeters.

In use, when a voltage is applied to the two electrodes 206 of the linear heater 20, and the carbon nanotube structure of the heating element 204 radiates heat at a certain wavelength. The object to be heated can be directly attached on the linear heater 20 or separated from the linear heater 20. By controlling the specific surface area of the heating element 204, varying the voltage and the thickness of the heating element 204, the heating element 204 emits heat at different wavelengths. If the voltage is determined at a certain value, the wavelength of the electromagnetic waves emitted from the heating element 204 is inversely proportional to the thickness of the heating element 204. That is to say, the greater the thickness of heating element 204 is, the shorter the wavelength of the electromagnetic waves is. Further, if the thickness of the heating element 204 is determined at a certain value, the greater the voltage applied to the electrode, the shorter the wavelength of the electromagnetic waves. As such, the linear heater 20, can easily be controlled for emitting a visible light and create general thermal radiation or emit infrared radiation.

Further, due to carbon nanotubes having an ideal black body structure, the heating element 204 has excellent electrical conductivity, thermal stability, and high thermal radiation efficiency. The linear heater 20 can be safely exposed, while working, to oxidizing gases in a typical environment. The linear heater 20 can radiate an electromagnetic wave with a long wavelength when a voltage is applied on the linear heater 20.

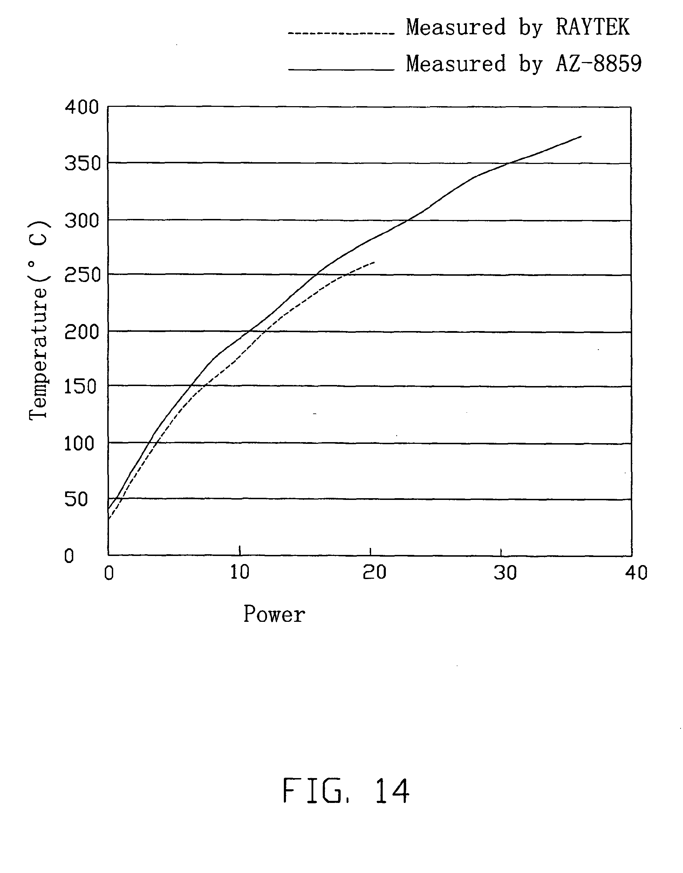

In one embodiment, the carbon nanotube structure includes 100 a plurality of drawn carbon nanotube films stacked with each other. An angle α between the primary directions of the carbon nanotubes in two adjacent stacked drawn carbon nanotube films is equal to 90°. A length of the carbon nanotube structure is about 5 centimeters, a width of the carbon nanotube structure is about 3 centimeters, and a thickness of the carbon nanotube structure is about 50 micrometers. The carbon nanotube structure is wrapped on the surface of the heat-reflecting layer 210 directly. The two electrodes 206 are separated from each other by about 3 centimeters. While a voltage ranging from about 1 to about 20 voltages is applied between the two electrodes 206, the heating power of the carbon nanotube structure is in a range from about 1 watt to about 40 watts. Measurement results show that the temperature of the carbon nanotube structure ranges from about 50 °C to about 500 °C. The heat is in form of electromagnetic waves to diffuse outside. Referring to FIG. 14, when a power of 36 watt is applied to the linear heater 20, the linear heater 20 can be in a temperature of about 370 °C.

Further, the linear heater 20 can be disposed in a vacuum device or a device with inert gas filled therein. When the voltage is increased in the approximate range from 80 volts to 150 volts, the linear heater 20 emits electromagnetic waves having a relatively short wave length such as visible light (e.g. red light, yellow light etc), general thermal radiation, and ultraviolet radiation. The temperature of the planar source 10 can reach 1500 °C. When the voltage on the linear heater 20 is high enough, the linear heater 20 can eradiate ultraviolet to kill bacteria.

When the linear heater 20 is used to heat an object, the linear heater 20 can be located on a surface of the object or separated from the object. Alternatively, a plurality of linear heaters 20 can be set in a pattern on a surface of the object or separated from the object.

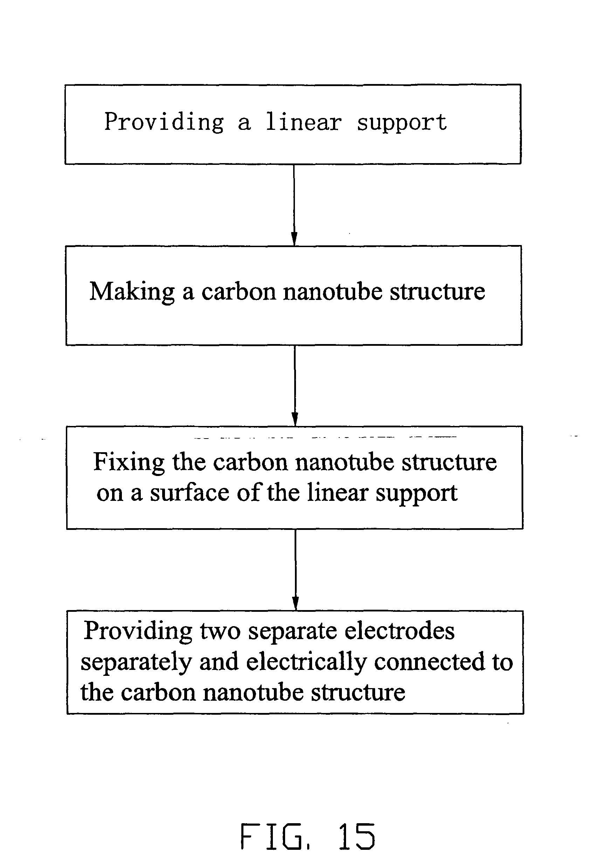

Referring to FIG. 15, a method for making a linear heater 20 is disclosed. The method includes the steps of:
S1: providing a linear supporter 202;
S2: making a carbon nanotube structure;
S3: fixing the carbon nanotube structure on a surface of the linear supporter 202; and
S4: providing two separate electrodes 206 separately and electrically connected to the carbon nanotube structure.

It is to be understood that, before step S3, an additional step of forming a heat-reflecting layer 210 attached to a surface of the linear supporter 202 can be performed. And the carbon nanotube structure is disposed on the surface of heat-reflecting layer 210, e.g. the heat-reflecting layer is located between the linear supporter 202 and the carbon nanotube structure. The heat-reflecting layer 210 can be formed by coating method, chemical deposition method, ion sputtering method, and so on. In one embodiment, the heat-reflecting layer 210 is a film made of aluminum oxide. The heat-reflecting layer 210 is coated on the surface of the linear supporter 202.

In step S2, the carbon nanotube structure includes carbon nanotube films and linear carbon nanotube structures. The carbon nanotube films can be a drawn carbon nanotube film, a pressed carbon nanotube film or a flocculated carbon nanotube film, or a combination thereof.

In step S2, a method of making a drawn carbon nanotube film includes the steps of:
S21: providing an array of carbon nanotubes; and
S22: pulling out at least a drawn carbon nanotube film from the carbon nanotube array.

In step S21, a method of forming the array of carbon nanotubes includes:
S211: providing a substantially flat and smooth substrate;
S212: forming a catalyst layer on the substrate;
S213: annealing the substrate with the catalyst at a temperature in the approximate range of 700°C to 900°C in air for about 30 to 90 minutes;
S214: heating the substrate with the catalyst at a temperature in the approximate range from 500°C to 740°C in a furnace with a protective gas therein; and
S215: supplying a carbon source gas to the furnace for about 5 to 30 minutes and growing a super-aligned array of the carbon nanotubes from the substrate.

In step S211, the substrate can be a P or N-type silicon wafer. Quite suitably, a 4-inch P-type silicon wafer is used as the substrate.

In step S212, the catalyst can be made of iron (Fe), cobalt (Co), nickel (Ni), or any combination alloy thereof.

In step S214, the protective gas can be made up of at least one of nitrogen (N₂), ammonia (NH₃), and a noble gas.

In step S215, the carbon source gas can be a hydrocarbon gas, such as ethylene (C₂H₄), methane (CH₄), acetylene (C₂H₂), ethane (C₂H₆), or any combination thereof.

In step S22, a drawn carbon nanotube film can be fromed by the steps of:
S221: selecting one or more carbon nanotubes having a predetermined width from the array of carbon nanotubes; and
S222: pulling the carbon nanotubes to form nanotube segments at an even/uniform speed to achieve a uniform carbon nanotube film.

In step S221, the carbon nanotube segment includes a plurality of parallel carbon nanotubes. The carbon nanotube segments can be selected by using an adhesive tape as the tool to contact the super-aligned array of carbon nanotubes. In step S222, the pulling direction is substantially perpendicular to the growing direction of the super-aligned array of carbon nanotubes.

More specifically, during the pulling process, as the initial carbon nanotube segments are drawn out, other carbon nanotube segments are also drawn out end to end due to van der Waals attractive force between ends of adjacent segments. This process of pulling produces a substantially continuous and uniform carbon nanotube film having a predetermined width can be formed.

After the step of S22, the drawn carbon nanotube film can be treated by applying organic solvent to the drawing carbon nanotube film to soak the entire surface of the carbon nanotube film. The organic solvent is volatile and can be selected from the group consisting of ethanol, methanol, acetone, dichloromethane, chloroform, any appropriate mixture thereof. In the one embodiment, the organic solvent is ethanol. After being soaked by the organic solvent, adjacent carbon nanotubes in the carbon nanotube film that are able to do so, bundle together, due to the surface tension of the organic solvent when the organic solvent is volatilizing. In another aspect, due to the decrease of the specific surface area via bundling, the mechanical strength and toughness of the drawing carbon nanotube film are increased and the coefficient of friction of the carbon nanotube films is reduced. Macroscopically, the drawing carbon nanotube film will be an approximately uniform film.

The width of the drawing carbon nanotube film depends on a size of the carbon nanotube array. The length of the drawing carbon nanotube film can be set as desired. In one embodiment, when the substrate is a 4 inch type wafer as in the present embodiment, a width of the carbon nanotube film can be in an approximate range from 1 centimeter to 10 centimeters, a length of the carbon nanotube film can reach to about 120m, a thickness of the drawing carbon nanotube film can be in an approximate range from 0.5 nanometers to 100 microns. Multiple films can be adhered together to form a film of any desired size.

In step S2, a method of making the pressed carbon nanotube film includes the following steps:
S21': providing a carbon nanotube array and a pressing device; and
S22': pressing the array of carbon nanotubes to form a pressed carbon nanotube film.

In step S21', the carbon nanotube array can be made by the same method as S11.

In the step S22', a certain pressure can be applied to the array of carbon nanotubes by the pressing device. In the process of pressing, the carbon nanotubes in the array of carbon nanotubes separate from the substrate and form the carbon nanotube film under pressure. The carbon nanotubes are substantially parallel to a surface of the carbon nanotube film.

In one embodiment, the pressing device can be a pressure head. The pressure head has a smooth surface. It is to be understood that, the shape of the pressure head and the pressing direction can determine the direction of the carbon nanotubes arranged therein. When a pressure head (e.g a roller) is used to travel across and press the array of carbon nanotubes along a predetermined single direction, a carbon nanotube film having a plurality of carbon nanotubes primarily aligned along a same direction is obtained. It can be understood that there may be some variation in the film. Different alignments can be achieved by applying the roller in different directions over an array. Variations on the film can also occur when the pressure head is used to travel across and press the array of carbon nanotubes several of times, variation will occur in the orientation of the nanotubes. Variations in pressure can also achieve different angles between the carbon nanotubes and the surface of the semiconducting layer on the same film. When a planar pressure head is used to press the array of carbon nanotubes along the direction perpendicular to the substrate, a carbon nanotube film having a plurality of carbon nanotubes isotropically arranged can be obtained. When a roller-shaped pressure head is used to press the array of carbon nanotubes along a certain direction, a carbon nanotube film having a plurality of carbon nanotubes aligned along the certain direction is obtained. When a roller-shaped pressure head is used to press the array of carbon nanotubes along different directions, a carbon nanotube film having a plurality of sections having carbon nanotubes aligned along different directions is obtained.

In step S2, the flocculated carbon nanotube film can be made by the following method:
S21": providing a carbon nanotube array;
S22": separating the array of carbon nanotubes from the substrate to get a plurality of carbon nanotubes;
S23": adding the plurality of carbon nanotubes to a solvent to get a carbon nanotube floccule structure in the solvent; and
S24": separating the carbon nanotube floccule structure from the solvent, and shaping the separated carbon nanotube floccule structure into a carbon nanotube film to achieve a flocculated carbon nanotube film.

In step S21", the carbon nanotube array can be formed by the same method as step (a1).

In step S22", the array of carbon nanotubes is scraped off the substrate to obtain a plurality of carbon nanotubes. The length of the carbon nanotubes can be above 10 microns.

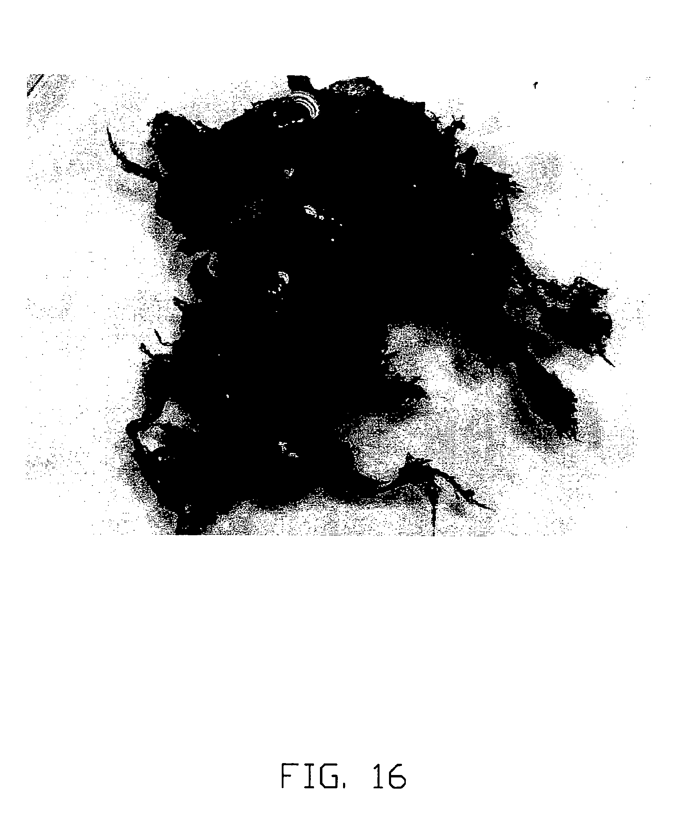

In step S23", the solvent can be selected from a group consisting of water and volatile organic solvent. After adding the plurality of carbon nanotubes to the solvent, a process of flocculating the carbon nanotubes can, suitably, be executed to create the carbon nanotube floccule structure. The process of flocculating the carbon nanotubes can be selected from the group consisting of ultrasonic dispersion of the carbon nanotubes and agitating the carbon nanotubes. In one embodiment ultrasonic dispersion is used to flocculate the solvent containing the carbon nanotubes for about 10 minutes to about 30 minutes. Due to the carbon nanotubes in the solvent having a large specific surface area and the tangled carbon nanotubes having a large van der Waals attractive force, the flocculated and tangled carbon nanotubes form a network structure (i.e., floccule structure) as show in Fig. 16.

In step S24", the process of separating the floccule structure from the solvent includes the substeps of:
S24"1: filtering out the solvent to obtain the carbon nanotube floccule structure; and
S24"2: drying the carbon nanotube floccule structure to obtain the separated carbon nanotube floccule structure.

In step S24"1, the carbon nanotube floccule structure can be disposed in room temperature for a period of time to dry the organic solvent therein. The time of drying can be selected according to practical needs. The carbon nanotubes in the carbon nanotube floccule structure are tangled together.

In step S24"2, the process of shaping includes the substeps of:
S24"21: putting the separated carbon nanotube floccule structure into a container (not shown), and spreading the carbon nanotube floccule structure to form a predetermined structure;
S24"22: pressing the spread carbon nanotube floccule structure with a certain pressure to yield a desirable shape; and
S24"23: removing the residual solvent contained in the spread floccule structure to form the flocculated carbon nanotube film.

Through the flocculating, the carbon nanotubes are tangled together by van der Walls attractive force to form a network structure/floccule structure. Thus, the flocculated carbon nanotube film has good tensile strength. The flocculated carbon nanotube film includes a plurality of micropores formed by the disordered carbon nanotubes. A diameter of the micropores can be less than about 100 micron. As such, a specific area of the flocculated carbon nanotube film is extremely large. Additionally, the pressed carbon nanotube film is essentially free of a binder and includes a large amount of micropores. The method for making the flocculated carbon nanotube film is simple and can be used in mass production.

In step S2, a linear carbon nanotube structure includes carbon nanotube wires and/or carbon nanotube cables. The carbon nanotube wire can be made by the following steps:
S21"': making a drawn carbon nanotube film; and
S22"': treating the drawn carbon nanotube film to form a carbon nanotube wire.

In step S21 "', the method for making the drawing carbon nanotube film is the same the step S21.

n step S22"', the drawn carbon nanotube film is treated with a organic solvent to form an untwisted carbon nanotube wire or is twisted by a mechanical force (e.g., a conventional spinning process) to form a twist carbon nanotube wire. The organic solvent is volatilizable and can be selected from the group consisting of ethanol, methanol, acetone, dichloroethane, and chloroform. After soaking in the organic solvent, the carbon nanotube segments in the carbon nanotube film can at least partially bundle into the untwisted carbon nanotube wire due to the surface tension of the organic solvent.

It is to be understood that a narrow carbon nanotube film can serve as a wire. In this situation, through microscopically view, the carbon nanotube structure is a flat film, and through macroscopically view, the narrow carbon nanotube film would look like a long wire.

In step S2, the carbon nanotube cable can be made by bundling two or more carbon nanotube wires together. The carbon nanotube cable can be twisted or untwisted. In the untwisted carbon nanotube cable, the carbon nanotube wires are parallel with each other, and the carbon nanotubes can be kept together by an adhesive (not shown). In the twisted carbon nanotube cable, the carbon nanotube wires twisted with each other, and can be adhered together by an adhesive or a mechanical force.

In step S2, the drawn carbon nanotube film, the pressed carbon nanotube film, the flocculated carbon nanotube film, or the linear carbon nanotube structure can be overlapped, stacked with each other, and/or disposed side by side to make a carbon nanotube structure. It is also understood that this carbon nanotube structure can be employed by all embodiments.

In step S3, the carbon nanotube structure can be attached on the surface of the linear supporter 202 by the adhesive properties of itself. Alternatively, the carbon nanotube structure can be fixed on the surface of the linear supporter202 with an adhesive or by a mechanical force. When the carbon nanotube structure includes a plurality of carbon nanotubes oriented along the same direction, the oriented direction should from one end of the linear supporter 202 to the other end of the linear supporter 202. In the present embodiment, the carbon nanotube structure includes 100 stacked drawn carbon nanotube films. An angle α between the primary directions of the carbon nanotubes in the two adjacent drawn carbon nanotube films is 90°.

In step S4, the two electrodes 206 are made of conductive materials, and can be formed on the surface of the heating element 204 by sputtering method or coating method. The two electrodes 206 can also be attached on the heating element 204 directly with a conductive adhesive or by a mechanical force. Further, silver paste can be applied on the surface of the heating element 204 directly to form the two electrodes 206. When the carbon nanotube structure includes a plurality of carbon nanotubes oriented along the same direction, it is necessary to ensure the oriented direction is from one electrode 206 to the other electrode 206. When the electrodes 206 are films such as metal films or conductive silver paste films, the electrodes 206 can be formed on the surface of the carbon nanotube structure by Physical Vapor Deposition (PVD) such as sputtering, Chemical Vapor Deposition (CVD), coating or other film technology. In one embodiment, two palladium films are formed on the surface of the carbon nanotube structure by sputtering to form the electrodes 206. When the electrodes 206 are metal wires or sheets, the electrodes 206 can be directly attached to the carbon nanotube structure to form an electrical contact therebetween. Also, the electrodes 206 can be attached on the surface of the carbon nanotube structure by a hot pressing process or conductive adhesive. In another embodiment, two copper sheets are fixed on the surface of the carbon nanotube structure by conductive silver paste.

In one embodiment, the electrodes 206 are drawn carbon nanotube films. The drawn carbon nanotube films can be adhered on the surface of the carbon nanotube structure to form the electrodes 206 directly or by hot pressing or conductive adhesive.

After step S4, an additional step of forming a protecting layer 208 to cover the carbon nanotube structure and the two electrodes 206 can be carried out. The protecting layer 208 can be form by a sputtering method or a coating method.

Finally, it is to be understood that the above-described embodiments are intended to illustrate rather than limit the disclosure. Variations may be made to the embodiments without departing from the spirit of the disclosure as claimed. The above-described embodiments illustrate the scope of the disclosure but do not restrict the scope of the disclosure.

It is also to be understood that the above description and the claims drawn to a method may include some indication in reference to certain steps. However, the indication used is only to be viewed for identification purposes and not as a suggestion as to an order for the steps.

## Claims

1. An apparatus comprising:
a linear heater (20) which comprises:
a linear supporter (202) having an outer surface;
a heating element (204) located on the linear supporter, wherein the heating element is a pure carbon nanotube structure consisting of a plurality of carbon nanotubes (145) joined end-to-end by van der Waals attractive force therebetween and oriented along a length direction of the linear supporter, wherein the carbon nanotube structure is wrapped on the outer surface of the linear supporter; and
two electrodes (206) located on a surface of the carbon nanotube structure, spaced from each other along the length direction of the linear supporter, and electrically connected to the heating element, wherein the two electrodes are configured to supply a voltage therebetween, wherein the two electrodes are lamellar rings wrapped on the heating element and the plurality of carbon nanotubes extends from one of the two electrodes to the other and is aligned along a direction perpendicular to the two electrodes.

2. An apparatus as claimed in claim 1, wherein the carbon nanotube structure comprises a carbon nanotube film.

3. An apparatus as claimed in claim 1, wherein the carbon nanotube structure comprises at least two stacked carbon nanotube films combined by the van der Waals attractive force therebetween.

4. An apparatus as claimed in claim 1, wherein the carbon nanotube structure comprises a plurality of linear carbon nanotube structures parallel with each other and disposed on the linear supporter (202).

5. An apparatus as claimed in claim 1, wherein the carbon nanotube structure comprises a plurality of linear carbon nanotube structures knitted to form a net disposed on the linear supporter (202).

6. An apparatus as claimed in either of claims 4 or 5, wherein the linear carbon nanotube structure comprises an untwisted carbon nanotube wire comprising a plurality of carbon nanotubes substantially oriented along a length of the untwisted carbon nanotube wire.

7. An apparatus as claimed in any of claims 1 to 6, wherein a heat capacity per unit area of the carbon nanotube structure is less than or equal to 2×10⁻⁴ J/cm²•K.

8. An apparatus as claimed in any of claims 1 to 7, further comprising a heat-reflecting layer (210) located between the linear supporter (202) and the heating element (204), wherein the heat-reflecting layer is made of insulative materials.

9. An apparatus as claimed in any of claims 1 to 8, further comprising a protecting layer (208) covering a surface of the carbon nanotube structure.

10. An apparatus as claimed in claim 1, wherein each of the two electrodes (206) is a carbon nanotube film.

11. An apparatus as claimed in claim 1, wherein each of the two electrodes (206) is a linear carbon nanotube structure wrapped on the heating element (204) to form the lamellar ring.

12. An apparatus as claimed in claim 1, wherein the linear supporter (202) is made of flexible materials being plastics, resins, fibers or combinations thereof.

13. An apparatus as claimed in claim 1, wherein the linear supporter (202) is made of rigid materials being ceramics, glasses, quartzes or combinations thereof.

## Patentansprüche

1. Eine Vorrichtung umfassend:
ein lineares Heizgerät (20), welches umfasst:
einen linearen Träger (202), der eine äußere Oberfläche aufweist;
ein Heizelement (204), das auf dem linearen Träger angeordnet ist, wobei das Heizelement eine reine Kohlenstoffnanoröhren-Struktur ist, die eine Mehrzahl von Kohlenstoffnanoröhren (145) aufweist, die durchgehend durch van-der-Waals-Anziehungskraft dazwischen verbunden sind und die entlang der Längsrichtung des linearen Trägers ausgerichtet sind, wobei die Kohlenstoffnanoröhren-Struktur auf die äußere Oberfläche des linearen Trägers gewikkelt ist; und
zwei Elektroden (206), die auf einer Oberfläche der Kohlenstoffnanoröhren-Struktur angeordnet sind, die entlang der Längsrichtung des linearen Trägers in Abständen voneinander angeordnet sind und die elektrisch mit dem Heizelement verbunden sind, wobei die zwei Elektroden ausgebildet sind, dazwischen eine Spannung bereitzustellen, wobei die zwei Elektroden lamellare Ringe sind, die auf das Heizelement gewickelt sind und die Mehrzahl von Kohlenstoffnanoröhren sich von einer der zwei Elektroden zu der anderen erstreckt und entlang einer Richtung rechtwinklig zu den zwei Elektroden ausgerichtet ist.

2. Eine Vorrichtung nach Anspruch 1, wobei die Kohlenstoffnanoröhren-Struktur einen Kohlenstoffnanoröhrenfilm aufweist.

3. Eine Vorrichtung nach Anspruch 1, wobei die Kohlenstoffnanoröhren-Struktur zumindest zwei gestapelte Kohlenstoffnanoröhrenfilme aufweist, die von der van-der-Waals-Anziehungskraft dazwischen verbunden werden.

4. Eine Vorrichtung nach Anspruch 1, wobei die Kohlenstoffnanoröhren-Struktur eine Mehrzahl von linearen parallel zueinander angeordneten und auf den linearen Träger (202) gewickelten Kohlenstoffnanoröhren-Strukturen aufweist.

5. Eine Vorrichtung nach Anspruch 1, wobei die Kohlenstoffnanoröhren-Struktur eine Mehrzahl von linearen KohlenstoffnanoröhrenStrukturen aufweist, die gestrickt sind, um ein auf dem linearen Träger (202) aufgelegtes Netz zu formen.

6. Eine Vorrichtung nach einem der Ansprüche 4 oder 5, wobei lineare die Kohlenstoffnanoröhren-Struktur einen aufgedrehten Kohlenstoffnanoröhrendraht aufweist, der eine Mehrzahl von Kohlenstoffnanoröhren aufweist, die im Wesentlichen entlang der Länge des aufgedrehten Kohlenstoffnanoröhrendrahtes ausgerichtet sind.

7. Eine Vorrichtung nach einem der Ansprüche 1 bis 6, wobei die Wärmekapazität pro Flächeneinheit der KohlenstoffnanoröhrenStruktur kleiner oder gleich 2x10⁻⁴ J/cm²K ist.

8. Eine Vorrichtung nach einem der Ansprüche 1 bis 7, weiterhin umfassend eine zwischen dem linearen Träger (202) und dem Heizelement (204) angeordnete Wärme reflektierende Schicht (210), wobei die Wärme reflektierende Schicht aus isolierenden Materialien hergestellt ist.

9. Eine Vorrichtung nach einem der Ansprüche 1 bis 8, weiterhin umfassend eine schützende Schicht (208), die die Oberfläche der Kohlenstoffnanoröhren-Struktur bedeckt.

10. Eine Vorrichtung nach Anspruch 1, wobei jede der zwei Elektroden (206) ein Kohlenstoffnanoröhrenfilm ist.

11. Eine Vorrichtung nach Anspruch 1, wobei jede der zwei Elektroden (206) eine lineare Kohlenstoffnanoröhren-Struktur ist, die auf das Heizelement (204) gewickelt ist, um einen lamellaren Ring zu formen.

12. Eine Vorrichtung nach Anspruch 1, wobei der lineare Träger (202) aus flexiblen Materialien, wie Kunststoffe, Harze, Fasern oder Kombinationen dieser hergestellt ist.

13. Eine Vorrichtung nach Anspruch 1, wobei der lineare Träger (202) aus steifen Materialien, wie Keramik, Gläser, Quarze oder Kombinationen dieser hergestellt ist.

## Revendications

1. Appareil comprenant :
un dispositif de chauffage linéaire (20) qui comprend :
un support linéaire (202) ayant une surface externe ;
un élément de chauffage (204) situé sur le support linéaire, dans lequel l'élément de chauffage est une structure de nanotubes de carbone pur constituée d'une pluralité de nanotubes de carbone (145) joints bout à bout par la force attractive de van der Waals appliquée entre eux et orientés dans une direction longitudinale du support linéaire, dans lequel la structure de nanotubes de carbone est enveloppée sur la surface externe du support linéaire ; et
deux électrodes (206) situées sur une surface de la structure de nanotubes de carbone, espacées l'une de l'autre dans la direction longitudinale du support linéaire et connectées électriquement à l'élément de chauffage, dans lequel les deux électrodes sont configurées pour fournir une tension entre elles, dans lequel les deux électrodes sont des anneaux lamellaires enveloppés sur l'élément de chauffage et la pluralité de nanotubes de carbone s'étendent de l'une des deux électrodes à l'autre et sont alignés dans une direction perpendiculaire aux deux électrodes.

2. Appareil selon la revendication 1, dans lequel la structure de nanotubes de carbone comprend un film de nanotubes de carbone.

3. Appareil selon la revendication 1, dans lequel la structure de nanotubes de carbone comprend au moins deux films de nanotubes de carbone empilés combinés par la force attractive de van der Waals instaurée entre eux.

4. Appareil selon la revendication 1, dans lequel la structure de nanotubes de carbone comprend une pluralité de structures de nanotubes de carbone linéaires parallèles l'une à l'autre et disposées sur le support linéaire (202).

5. Appareil selon la revendication 1, dans lequel la structure de nanotubes de carbone comprend une pluralité de structures de nanotubes de carbone linéaires tricotées pour former un filet disposé sur le support linéaire (202).

6. Appareil selon l'une quelconque des revendications 4 ou 5, dans lequel la structure de nanotubes de carbone linéaire comprend un fil de nanotubes de carbone non retordu comprenant une pluralité de nanotubes de carbone sensiblement orientés sur une longueur du fil de nanotubes de carbone non retordu.

7. Appareil selon l'une quelconque des revendications 1 à 6, dans lequel la capacité calorifique par unité de surface de la structure de nanotubes de carbone est inférieure ou égale à 2 x 10⁻⁴ J/cm².K.

8. Appareil selon l'une quelconque des revendications 1 à 7, comprenant en outre une couche thermo-réfléchissante (210) située entre le support linéaire (202) et l'élément de chauffage (204), dans lequel la couche thermo-réfléchissante est constituée de matériaux isolants.

9. Appareil selon l'une quelconque des revendications 1 à 8, comprenant en outre une couche de protection (208) couvrant une surface de la structure de nanotubes de carbone.

10. Appareil selon la revendication 1, dans lequel chacune des deux électrodes (206) est un film de nanotubes de carbone.

11. Appareil selon la revendication 1, dans lequel chacune des deux électrodes (206) est une structure de nanotubes de carbone linéaire enveloppée sur l'élément de chauffage (204) pour former l'anneau lamellaire.

12. Appareil selon la revendication 1, dans lequel le support linéaire (202) est constitué de matériaux flexibles qui sont des matières plastiques, des résines, des fibres ou leurs combinaisons.

13. Appareil selon la revendication 1, dans lequel le support linéaire (202) est constitué de matériaux rigides qui sont des céramiques, des verres, des quartz ou leurs combinaisons.
